# EUROPEAN PATENT APPLICATION

(11) **EP 1 262 431 A1**
(43) Date of publication of application: **04.12.2002**
(21) Application number: 02011829.5
(22) Date of filing: 28.05.2002
(51) Int. Cl.: B65G 47/90, B65B 21/18

(54) **Gripping head for depalettizing machines**

(30) Priority: 29.05.2001 IT TO20010511
(71) Applicant: OMA S.r.l., 37069 Villafranca di Verona (IT)
(72) Inventor: Baldi, Giampietro, 37069 Villafranca Di Verona (IT)
(74) Representative: Cerbaro, Elena, Dr.

(57) **Abstract**

A gripping head (1) for depalletizing machines (2) having a number of gripping devices having two elastically deformable fork-shaped members fixed side by side; each fork-shaped member having two side by side prongs (10a) extending vertically downwards; the gripping device (9) also having two retaining wires or rods (11) extending between the two fork-shaped members; and the retaining wires or rods (11) being positioned resting on the neck (4a) of the bottle (4), on opposite sides of the neck (4a), so as to secure the bottle (4) to the supporting structure.

## Description

The present invention relates to a gripping head for depalletizing machines.

More specifically, the present invention relates to a gripping head for machines for depalletizing short-necked bottles, to which the following description refers purely by way of example.

In the packing machine industry, numerous types of depalletizing machines are known for receiving a "pallet of bottles" at the input, and supplying at the output a succession of loose bottles for supply to other machines.

"Pallets of bottles" are defined by a given number of layers of bottles stacked to form, when packed, a block that can be transported easily; and each layer of bottles is defined by a given number of rows of bottles arranged parallel and adjacent to one another on a tray or supporting panel resting on the layer of bottles underneath.

Most known bottle depalletizing machines comprise: a work platform, on which the pallet to be unpacked is positioned; a product accumulating surface located alongside the work platform; and a gripping head, which moves over the work platform and the accumulating surface to remove a given number of rows of bottles off the top of the pallet on the work platform, and deposit the rows of bottles on the accumulating surface adjacent to the work platform.

To remove the rows of products, the gripping head of depalletizing machines normally comprises a number of gripping devices specially designed and sized according to the type of product for handling.

In the case of short-necked bottles, the gripping devices are defined by a suction pump, and a number of bell-shaped suction cups arranged on a supporting frame to accurately reproduce the spatial arrangement of the bottles in each, or part of each, layer on the pallet.

When moved over the layer of bottles defining the top of the pallet, the gripping head positions each suction cup so that it rests on top of a respective bottle, and the neck of the bottle engages a recess at the center of the suction cup; and the suction pump is connected to the suction cups to draw out, on command, the air trapped inside each suction cup and the relative bottle, so that the suction cup adheres to the body of the bottle, thus enabling it to be lifted.

Each time it moves from the work platform to the product accumulating surface, the gripping head therefore removes a whole layer of bottles, or part of it, off the top of the pallet resting on the work platform.

Gripping heads with gripping devices of the above type, however, have the major drawback of requiring a highly accurate, high-cost system for positioning them on top of the pallet. That is, each suction cup on the gripping head must be centered exactly with the corresponding short-necked bottle for it to adhere perfectly to the bottle.

Another major drawback of gripping heads with gripping devices of the above type is that of requiring a large suction pump capable of withdrawing air rapidly and simultaneously from all the short-necked bottles to be transferred at each stroke of the head.

It is an object of the present invention to provide a gripping head for depalletizing machines, designed to eliminate the aforementioned drawbacks.

According to the present invention, there is provided a gripping head for depalletizing machines for automatically unpacking a succession of pallets of bottles or similar, and supplying at the output a succession of single bottles; the gripping head comprising a supporting structure, and at least one gripping device fixed to said supporting structure to grip, on command, at least one said bottle; and the gripping head being characterized in that said at least one gripping device comprises at least two elastically deformable fork-shaped members fixed side by side and in a vertical position to the supporting structure; each fork-shaped member having two side by side prongs extending downwards; and the gripping device also comprising two retaining wires or rods extending between said two fork-shaped members, so that each retaining wire or rod connects one prong of a first of said at least two fork-shaped members to a corresponding prong of the other of said at least two fork-shaped members; said retaining wires or rods being positioned resting on the neck of the bottle, on opposite sides of said neck, so as to secure the bottle to said supporting structure.

A non-limiting embodiment of the present invention will be described by way of example with reference to the accompanying drawings, in which:
Figure 1 shows a front view, with parts removed for clarity, of a depalletizing machine featuring a gripping head in accordance with the teachings of the present invention;
Figures 2 and 3 show a front and side view respectively of the Figure 1 gripping head;
Figure 4 shows a view in perspective of a detail of the Figure 2 and 3 gripping head.

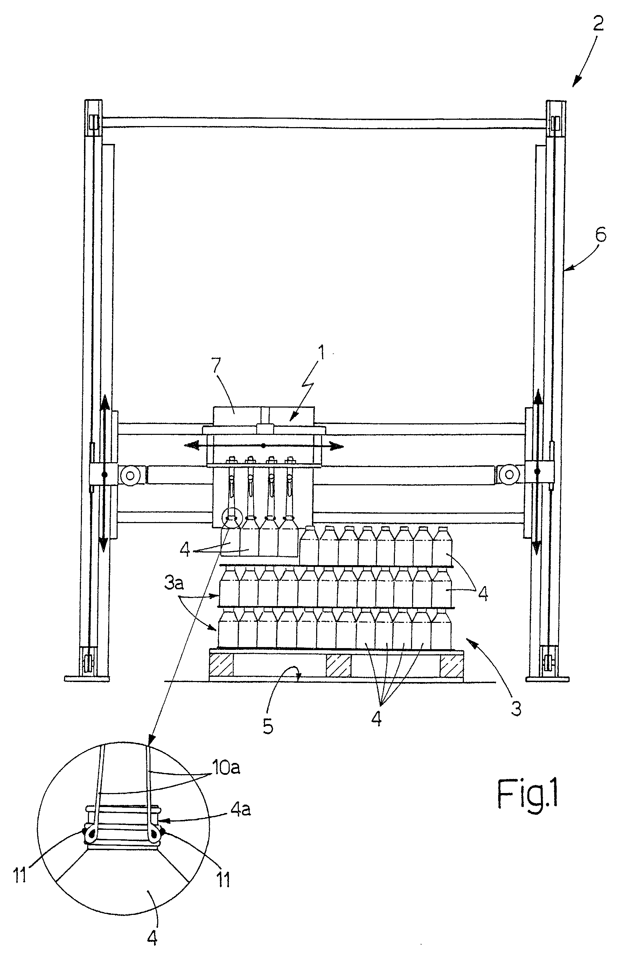

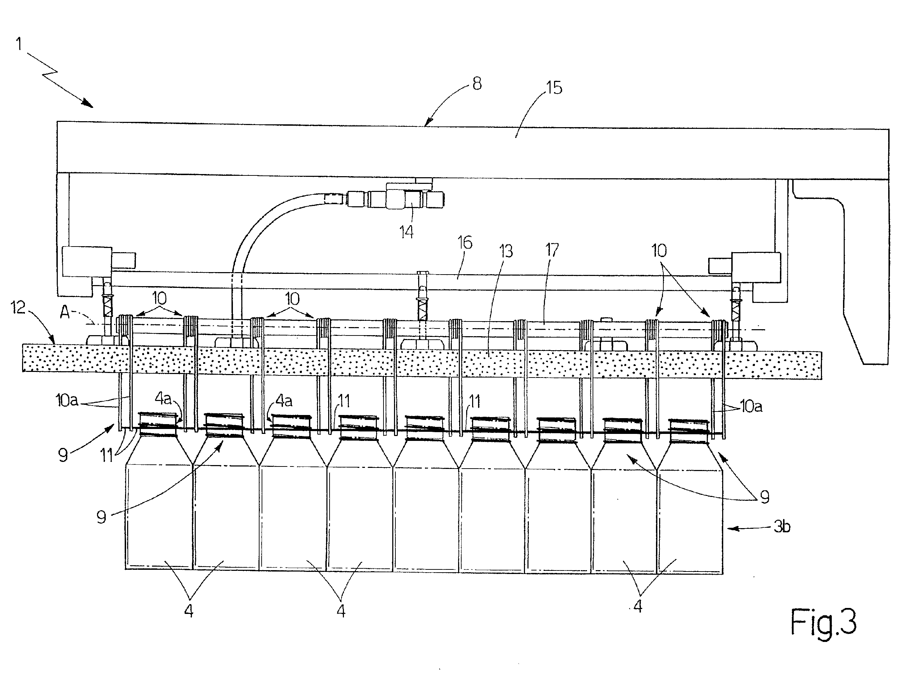

With reference to Figures 1, 2 and 3, number 1 indicates as a whole a gripping head particularly suitable for assembly on a depalletizing machine 2 for fully automatically unpacking a pallet 3 of short-necked bottles or similar, and supplying, at the output, a succession of individual short-necked bottles 4 for use on other machines.

Like any other "pallet of products", pallets 3 of short-necked bottles are defined by a compact, orderly group of short-necked bottles 4, in turn defined by a number of layers 3a of bottles stacked to form, when packed, a block that is easy to transport. Each layer 3a of bottles is defined by a given number of parallel, adjacent rows 3b of bottles arranged preferably, though not necessarily, in a five-spot pattern.

In the example shown, pallet 3 of short-necked bottles 4 is defined by three superimposed layers 3a of bottles, each of which is defined by twelve rows 3b of bottles arranged in a five-spot pattern; and each row 3b of bottles is defined by nine short-necked bottles 4.

With reference to Figure 1, depalletizing machine 2 in the example shown comprises: a work platform 5 on which the pallet 3 for unpacking is positioned; a product accumulating surface (not shown) alongside work platform 5; a supporting frame 6 spanning work platform 5 and the accumulating surface; and a head slide 7 fitted to frame 6 to move horizontally and vertically over work platform 5 and the product accumulating surface.

Gripping head 1 provides for retaining and releasing, on command, a given number of rows 3b of bottles in any layer 3a of bottles in pallet 3, and is fixed to head slide 7 to move over work platform 5 and the product accumulating surface (not shown), to pick up, on command, a given number of rows 3b of bottles off the top of pallet 3 on work platform 5, and to deposit the rows 3b of bottles onto the product accumulating surface alongside work platform 5.

With reference to Figures 1, 2 and 3, gripping head 1 comprises a supporting structure 8 fitted to head slide 7 over work platform 5 and the product accumulating surface (not shown); and a number of gripping devices 9 fitted to supporting structure 8 so as to face work platform 5 and the product accumulating surface.

Gripping devices 9 each provide for selectively retaining a respective short-necked bottle 4, and are arranged on supporting structure 8 to accurately reproduce the spatial arrangement of short-necked bottles 4 in each, or in part of each, layer 3a of bottles.

In other words, gripping devices 9 are arranged in parallel rows on supporting structure 8, so that each is aligned over a respective short-necked bottle 4 when gripping head 1 is arrested over pallet 3 on work platform 5.

It should be pointed out that the number and arrangement of gripping devices 9 on supporting structure 8 vary, depending on the number of rows 3b of bottles to be removed simultaneously from the top layer 3a of bottles in pallet 3. It is possible, in fact, to remove at one time either a whole layer 3a of bottles, or a number of rows 3b of bottles equal to less than the total number of rows 3b of bottles defining each layer 3a of bottles.

In the example shown, gripping devices 9 are arranged in four rows, each comprising a number of gripping devices equal to the number of short-necked bottles 4 in any one row 3b - in the example shown, nine.

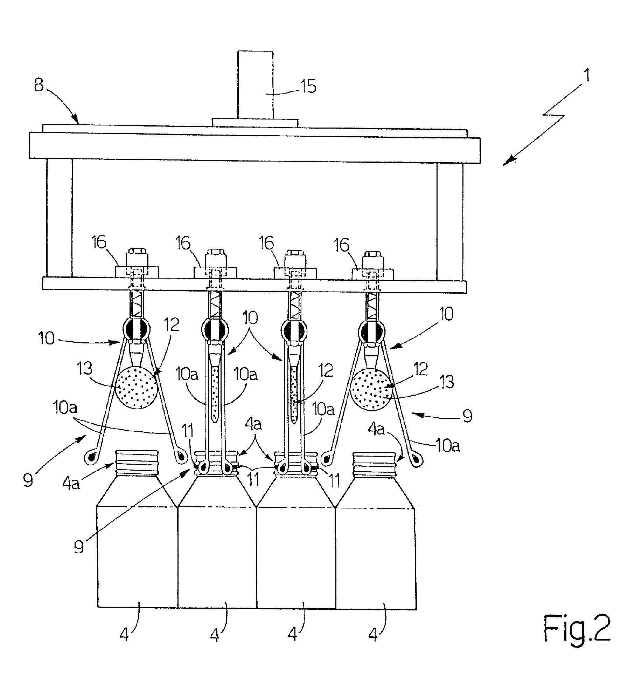

With reference to Figures 2, 3 and 4, each gripping device 9 is defined by a gripper having two jaws, which are positioned over short-necked bottle 4, on opposite sides of neck 4a of the bottle. The two jaws are movable, on command, between a closed position, in which they are closed with the ends resting on neck 4a of the bottle, and an open position, in which they are parted with the ends as far away as possible from neck 4a of the bottle.

Unlike known gripping devices, the jaws of each gripping device 9 comprise two elastically deformable fork-shaped members 10, each of which has two straight, substantially parallel prongs 10a, and is suspended vertically from supporting structure 8 so that the two prongs 10a extends substantially vertically, with the ends facing downwards, i.e. towards work platform 5 and the product accumulating surface.

More specifically, the two fork-shaped members 10 of each gripping device 9 are suspended vertically from supporting structure 8 on opposite sides of neck 4a of the bottle, so that the ends of prongs 10a of the two fork-shaped members 10 can be positioned on opposite sides of neck 4a of short-necked bottle 4.

The jaws of each gripping device 9 also comprise two parallel retaining wires 11 extending between the two fork-shaped members 10, so that each connects the end of a respective prong 10a of the first fork-shaped member 10 to the end of a corresponding prong 10a of the second fork-shaped member 10, thus securing the two fork-shaped members 10 to each other. In other words, the two retaining wires 11 are parallel, and extend horizontally between the two fork-shaped members 10 so that each wire connects the end of a prong 10a of the first fork-shaped member 10 to the end of a prong 10a of the second fork-shaped member 10.

When gripping device 9 is positioned over a short-necked bottle 4 to grip the bottle, the two retaining wires 11 are located on opposite sides of neck 4a of the bottle, so as to surround and retain neck 4a of the bottle when the jaws are closed.

It should be pointed out that fork-shaped members 10 are so formed that the axial ends of prongs 10a, and therefore retaining wires 11, are maintained a minimum distance apart. Which minimum distance is less than the overall transverse dimension of neck 4a, i.e. the width of neck 4a of the bottle measured in a horizontal direction perpendicular to retaining wires 11, so that, when fork-shaped members 10 are in the undeformed configuration, the two retaining wires 11 defining the jaws of gripping device 9 are drawn onto neck 4a of the bottle, and adapt to the shape of neck 4a to engage the thread or any annular projections on neck 4a, and so secure short-necked bottle 4 to supporting structure 8.

In the example shown, retaining wires 11 stretched between the ends of prongs 10a of the two fork-shaped members 10 are made of metal to combine rigidity and elasticity, but may obviously be easily replaced with horizontal rods of elastically deformable material. The mechanical characteristics of retaining wires or rods 11 must obviously be such as to ensure optimum grip of neck 4a of the bottle, but without producing permanent deformation of the neck.

With reference to Figures 2, 3 and 4, gripping device 9 also comprises a parting member 12, which, on command, parts prongs 10a of the two fork-shaped members 10 to move the two retaining wires 11 as far away from each other as possible, and so move the jaws of gripping device 9 into the open position.

Each fork-shaped member 10 is so formed as to spring back to its original configuration when parting member 12 is deactivated, so that operation of parting member 12 moves the jaws of gripping device 9 into the open position, and the jaws spring naturally back into the closed position when parting member 12 is deactivated.

In the example shown, parting member 12 comprises an air bladder 13 trapped between prongs 10a of the two fork-shaped members 10 of gripping device 9; and a solenoid valve 14, which is opened and closed in controlled manner to regulate pressurized air supply to bladder 13 to inflate bladder 13 in controlled manner and so part prongs 10a of each fork-shaped member 10. Solenoid valve 14 is controlled by an electronic central control unit (not shown) of depalletizing machine 2, so as to open and close fork-shaped members 10 of gripping device 9 on command.

With reference to Figures 2, 3 and 4, since, as stated, gripping devices 9 are arranged in parallel rows, the fork-shaped members 10 in the same row of gripping devices 9 are therefore all aligned with one another, with prongs 10a arranged in two parallel rows. Forkshaped members 10 in the same row of gripping devices 9 are therefore conveniently suspended from one element of supporting structure 8, the intermediate fork-shaped members 10 being shared between adjacent gripping devices, and a single elongated bladder 13 being used to simultaneously open all the fork-shaped members 10 in the same row of gripping devices 9.

For the same reasons, one pair of retaining wires 11 is conveniently used, the wires extending along the whole length of the row of gripping devices 9, and through the ends of prongs 10a of all the fork-shaped members 10 in the row of gripping devices 9. In this case, by appropriately sizing retaining wires 11, it is possible to reduce the number of fork-shaped members 10, by the jaws of each gripping device 9 being made to simultaneously retain more than one short-necked bottle 4.

With reference to Figures 2, 3 and 4, for the above reasons, supporting structure 8, in the example shown, comprises a top supporting bracket 15 fixed to head slide 7 so as to project over work platform 5 and the product accumulating surface; and four horizontal cross members 16 fixed beneath top bracket 15 so as to be parallel to one another and to the rows 3b of bottles in pallet 3.

Horizontal cross members 16 each support a respective row of gripping devices 9, and are fixed to supporting bracket 15 for easy removal, i.e. to enable a skilled operator to quickly adjust the spacing and number of horizontal cross members 16 fixed at one time beneath top bracket 15.

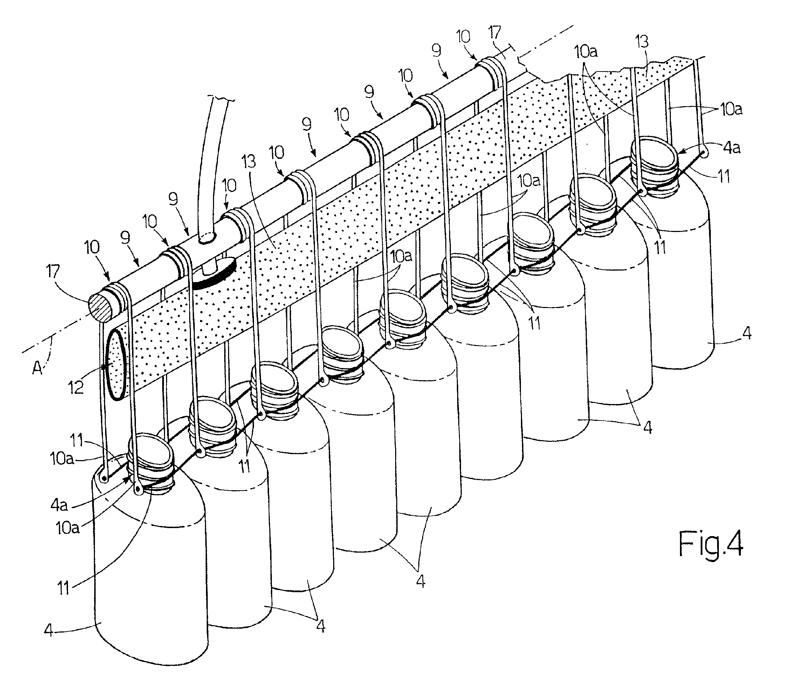

With reference to Figure 4, fork-shaped members 10 in the same row of gripping devices 9 hang astride a single horizontal bar 17, in turn suspended from and parallel to horizontal cross member 16.

Bladder 13, on the other hand, is suspended directly from horizontal cross member 16, and extends parallel to and just beneath horizontal bar 17, so as to be interposed between the two prongs 10a of each fork-shaped member 10 suspended from horizontal bar 17.

With reference to Figure 4, it should be pointed out that, in the example shown, fork-shaped members 10 are each defined by a helical torsion spring made of metal (e.g. stainless steel), and which comprises a central portion coiled about a given axis A, and two straight end portions extending parallel to and facing each other along two planes perpendicular to axis A. The two end portions of the helical spring define prongs 10a of fork-shaped member 10, and the central portion of the helical spring is sized to fit onto horizontal bar 17.

With reference to Figures 2, 3 and 4, it should be pointed out that, in the example shown, bladders 13 of gripping devices 9 are each defined by a so-called "inflatable blade" - i.e. an inflatable tubular element already widely used in the industry for gripping rows of long-necked glass bottles - which, being a known component, is not described in detail.

Operation of gripping head 1 is easily deducible from the foregoing description, with no further explanation required.

The advantages of gripping head 1 are obvious: gripping devices 9 being self-centering, depalletizing machine 2 can employ less accurate systems for positioning gripping head 1 than those currently used, thus greatly reducing production cost. To grip a short-necked bottle 4, retaining wires 11 need simply be positioned on opposite sides of necks 4a of the bottles, with no need for accurate alignment with the centers of the bottles.

Gripping head 1 also has the advantage of adapting to short-necked bottles 4 of different sizes, by fork-shaped members 10 adapting, within limits, to different-sized necks 4a. To grip short-necked bottles 4, in fact, parting member 12 need simply be capable of parting prongs 10a of fork-shaped members 10 to separate retaining wires 11 by a distance greater than the width of necks 4a of the bottles, so as to enable gripping devices 9 to be lowered onto the bottles.

Clearly, changes may be made to gripping head 1 as described and illustrated herein without, however, departing from the scope of the present invention.

## Claims

1. A gripping head (1) for depalletizing machines (2) for automatically unpacking a succession of pallets (3) of bottles (4) or similar, and supplying at the output a succession of single bottles (4); the gripping head (1) comprising a supporting structure (8), and at least one gripping device (9) fixed to said supporting structure (8) to grip, on command, at least one said bottle (4); and the gripping head (1) being **characterized in that** said at least one gripping device (9) comprises at least two elastically deformable fork-shaped members (10) fixed side by side and in a vertical position to the supporting structure (8); each fork-shaped member (10) having two side by side prongs (10a) extending downwards; and the gripping device (9) also comprising two retaining wires or rods (11) extending between said at least two fork-shaped members (10), so that each retaining wire or rod (11) connects one prong (10a) of a first of said at least two fork-shaped members (10) to a corresponding prong (10a) of the other of said at least two fork-shaped members (10); said retaining wires or rods (11) being positioned resting on the neck (4a) of the bottle (4), on opposite sides of said neck (4a), so as to secure the bottle (4) to said supporting structure (8).

2. A gripping head as claimed in Claim 1, **characterized in that** said at least two fork-shaped members (10) are so formed as to keep said retaining wires or rods (11) parted by a given distance smaller than the overall transverse dimension of the neck (4a) of said bottle (4) or similar.

3. A gripping head as claimed in Claim 1 or 2, **characterized in that** said retaining wires or rods (11) are parallel to each other, and extend horizontally between said at least two fork-shaped members (10), so as to connect the ends of the prongs (10a) of said at least two fork-shaped members (10).

4. A gripping head as claimed in any one of the foregoing Claims, **characterized in that** said gripping device (9) comprises parting means (12), which, on command, part the prongs (10a) of said at least two fork-shaped members (10), so as to move the two retaining wires or rods (11) away from each other.

5. A gripping head as claimed in Claim 4, **characterized in that** said parting means comprise an air bladder (13) interposed between the prongs (10a) of said at least two fork-shaped members (10); and valve means (14) for regulating pressurized air supply to said air bladder (13), so as to inflate the air bladder (13) in controlled manner and so part the prongs (10a) of the fork-shaped members (10).

6. A gripping head as claimed in any one of the foregoing Claims, **characterized in that** said at least two fork-shaped members (10) are each defined by a helical torsion spring (10) having a central portion coiled about a given axis (A), and two end portions (10a) extending parallel to and facing each other and crosswise to said axis (A).

7. A gripping head as claimed in any one of the foregoing Claims, **characterized by** comprising a number of gripping devices (9), each for selectively retaining at least one bottle (4); said gripping devices (9) being arranged on said supporting structure (8) so as to reproduce the spatial arrangement of the bottles (4) in any, or in part of any, layer (3a) of bottles in said pallet (3).

8. A gripping head as claimed in Claim 7, **characterized in that** said gripping devices (9) are arranged on the supporting structure (8) in parallel rows.

9. A gripping head as claimed in Claim 8, **characterized in that** the fork-shaped members (10) of gripping devices (9) in the same row of gripping devices are aligned with one another and all carried by the same supporting element (17) of said supporting structure (8).

10. A gripping head as claimed in Claim 9, **characterized in that** said parting means (12) comprise a single elongated air bladder (13) extending just beneath said supporting element (17) of the fork-shaped members (10), so as to be interposed between the two prongs (10a) of each fork-shaped member (10) suspended from the supporting element (17).

11. A depalletizing machine (2), **characterized by** comprising at least one gripping head (1) as claimed in any one of Claims 1 to 10.
